# FASCICULE DE BREVET EUROPEEN

(11) **EP 2 552 669 B1**
(45) Date de publication et mention de la délivrance du brevet: **17.12.2014**
(21) Numéro de dépôt: 11711087.4
(22) Date de dépôt: 30.03.2011
(51) Int. Cl.: B29C 49/42, B65G 47/90

(54) **DISPOSITIF POUR LE TRANSPORT D'UNE PREFORME AVEC ROTATION DE LA PREFORME AUTOUR DE SON AXE PRINCIPAL**
VORRICHTUNG FÜR DEN TRANSPORT EINER VORFORM MIT DREHUNG DER VORFORM UM IHRE HAUPTACHSE
DEVICE FOR TRANSPORTING A PREFORM WITH ROTATION OF THE PREFORM ABOUT ITS MAIN AXIS

(30) Priorité: 31.03.2010 FR 1052388
(43) Date de publication de la demande: 06.02.2013
(73) Titulaire: Sidel Participations, 76930 Octeville sur Mer (FR)
(72) Inventeur: CIRETTE, Damien, F-76930 Octeville Sur Mer (FR); GILLET, Denis, F-76930 Octeville Sur Mer (FR); DOUDEMENT, Christophe, F-76930 Octeville Sur Mer (FR)
(74) Mandataire: Gevers France
(86) Numéro de dépôt international: PCT/EP2011/054882
(87) Numéro de publication internationale: WO 2011/121007

(56) Documents cités:
- EP-A1- 1 306 192
- WO-A1-2009/060255
- US-A- 3 863 753
- US-A- 3 885 825
- US-A- 3 981 673

## Description

L'invention concerne un dispositif pour le transport d'une préforme tubulaire avec rotation de la préforme autour de son axe principal.

L'invention concerne plus particulièrement un dispositif pour le transport d'une préforme tubulaire avec rotation de la préforme autour de son axe principal vertical, le dispositif comportant :
- une pince de préhension de la préforme extérieurement par son col, la pince étant montée tournante autour d'un axe vertical de rotation sur une platine de manière à faire tourner la préforme saisie autour de son axe principal ;
- un premier mors et un deuxième mors opposé de la pince dont chacun est destiné à coopérer avec un secteur angulaire de la face externe du col de la préforme, au moins l'un des deux mors étant mobile selon une direction globalement orthogonale à l'axe de rotation de la pince ;
- des moyens de commande de la pince entre :
   -- une position ouverte dans laquelle les mors sont écartés l'un de l'autre pour permettre l'insertion du col de la préforme entre les mors dans un espace de serrage ;
   -- une position fermée dans laquelle les mors sont rapprochés l'un de l'autre pour saisir, par serrage transversal entre les deux mors, le col de la préforme préalablement inséré.

L'invention se rapporte au domaine de la fabrication de corps creux en matériau thermoplastique, fabrication pour laquelle on réalise d'abord une préforme par injection. Le préforme est ensuite conditionnée thermiquement dans un four. Puis elle est formée par soufflage ou étirage soufflage au moyen d'une machine de soufflage pour obtenir le récipient final.

On entend par « corps creux » une préforme de récipient, ou encore un récipient final, ou éventuellement un récipient intermédiaire, c'est-à-dire tout type de corps creux comportant un corps depuis lequel s'étend un col tubulaire débouchant.

Dans la suite du document, il sera utilisé de préférence, de manière non limitative, le terme préforme.

La préforme présente généralement un corps cylindrique tubulaire qui est fermé à l'une de ses extrémités axiales et qui est prolongé à son autre extrémité par un col, lui aussi tubulaire.

Le col s'étend axialement depuis une collerette principale annulaire qui est agencée à la jonction du col et du corps de la préforme, jusqu'à une lèvre annulaire qui délimite une ouverture axiale du col.

Le corps de la préforme est appelé à subir une déformation plastique pour former le récipient final lors de l'opération de soufflage. Pour pouvoir procéder à cette opération de soufflage, il est nécessaire que le corps de la préforme soit porté à une température supérieure à la température de transition vitreuse du matériau. A cet effet, on procède à un conditionnement thermique de la préforme en la faisant circuler à l'intérieur d'un four, au moyen d'un dispositif de transport sans fin, suivant un trajet de chauffage. Le four comporte des moyens de chauffage qui sont par exemple constitués par des lampes à infrarouge devant lesquelles la préforme est déplacée par le dispositif de transport.

Lors de son déplacement dans le four, la préforme est avantageusement entraînée en rotation autour de son axe principal afin d'homogénéiser le chauffage de la préforme.

Les préformes sont généralement maintenues sur le dispositif de transport par des moyens de préhension.

La préforme est transférée, ou chargée, à l'entrée du four par des moyens de transfert de la préforme depuis un dispositif d'alimentation en préformes jusqu'au dispositif de transport.

L'opération consistant à saisir, par les moyens de préhension, une préforme portée les moyens de transfert est appelée « vêtissage ».

De la même manière, à la sortie du four, la préforme chauffée est transférée, ou déchargée, par des moyens de transfert supplémentaires depuis le dispositif de préhension, jusqu'à la machine de soufflage des préformes.

Traditionnellement, les dispositifs de préhension agrippent les préformes par la face interne du col. Le dispositif de préhension est alors animé d'un mouvement vertical de montée et de descente selon l'axe principal de la préforme par rapport au moyen de transfert afin de permettre l'insertion des moyens de préhension dans le col. A cet effet, les dispositifs de transports circulent au-dessus des moyens de transfert.

La trajectoire d'une préforme portée par les moyens de transfert est généralement tangente avec la trajectoire des dispositifs de transport en un point ou, au mieux, les deux trajectoires sont superposées sur une courte distance. Cette zone de superposition en un point ou sur une courte distance est appelée par la suite "zone de vêtissage".

Pour que l'opération de vêtissage puisse avoir lieu, les moyens de préhension doivent être synchronisés avec les moyens de transfert pour que les moyens de préhension soient actionnés exactement au droit de la zone de vêtissage.

Cependant, on a constaté que ce mouvement axial était préjudiciable à la cadence du transfert des préformes. En effet, au-delà d'une vitesse de défilement du dispositif de transport et des moyens de transfert, on a constaté une légère désynchronisation entre les moyens de préhension et les moyens de transfert. Il résulte parfois de cette désynchronisation des chocs violents entre la lèvre d'extrémité du col et le dispositif de préhension. Au mieux, ce choc endommage irrémédiablement la préforme heurtée, au pire, la préforme heurtée bloque la roue de transfert et provoque l'arrêt de la machine le temps que le blocage soit résolu par intervention d'un technicien.

En outre, les directions de déplacement des moyens de préhension et celui des moyens de transfert sont tangentes en un seul point. Après ce point de tangence, les directions de déplacement divergent, ce qui provoque aussi des problèmes au fur et à mesure de l'augmentation des cadences de défilement des préformes, notamment des problèmes de contrainte sur le col des préformes qui sont tiraillées entre ces deux directions de déplacement divergentes.

Or, le col de la préforme possède déjà sa forme définitive. Le col ne doit donc pas être déformé ni endommagé lors des manipulations de la préforme, notamment pendant son transport dans le four.

D'autres moyens de préhension propose aussi des prises du col par l'extérieur. Ces moyens de préhension sont par exemple formés par des griffes qui s'agrippent tout autour du col par emboîtement élastique.

Cependant, le mouvement vertical est conservé du fait de la répartition des griffes tout autour du col de la préforme à saisir. Cette solution cause donc des problèmes similaires à ceux évoqués précédemment.

Le document US--A-3.885.825 décrit un exemple de tels moyens de préhension qui coulissent verticalement pour saisir le col d'un récipient.

Pour résoudre notamment ces problèmes, l'invention propose un dispositif de transport du type décrit précédemment, caractérisé en ce que, en position ouverte de la pince, un passage est réservé pour l'insertion latérale du col de la préforme entre les mors selon une direction orthogonale à l'axe de rotation de la pince.

Selon d'autres caractéristiques de l'invention :
- la pince tournante comporte un support supérieur qui s'étend verticalement au droit de l'espace de serrage, les moyens de commande de la pince tournante étant portés par le support de manière solidaire en rotation avec la pince tournante ;
- chaque mors mobile est formé par une extrémité inférieure d'un bras de serrage globalement vertical monté mobile sur le support supérieur, un bras supérieur d'actionnement s'étendant depuis l'extrémité supérieure du bras inférieur de serrage, et le bras d'actionnement étant agencé à l'intérieur d'un volume délimité par un cylindre droit vertical, la directrice dudit cylindre étant formée par le contour de l'espace de serrage ;
- les moyens de commande comportent un élément mobile d'actionnement qui est apte à transmettre mécaniquement un effort exercé depuis l'extérieur de la pince tournante jusqu'à chaque bras mobile de serrage pour écarter les mors en position ouverte, l'élément d'actionnement étant agencé verticalement au droit de l'espace de serrage ;
- chaque bras de serrage est monté pivotant à la manière d'un levier autour d'un axe longitudinal sur le support ;
- l'élément d'actionnement est formé par un coulisseau qui est monté coulissant verticalement à proximité de l'axe de rotation de la pince de préhension, les moyens de commande comportant des moyens pour transformer le mouvement de coulissement vertical du coulisseau en mouvement de pivotement de chaque bras de serrage entre les deux positions ouverte et fermée de la pince ;
- le coulisseau est en contact de manière glissante avec une face supérieure de chaque bras d'actionnement de manière à appuyer verticalement contre ladite face pour faire pivoter le bras de serrage associé par effet de levier vers la position ouverte de la pince tournante ;
- le coulisseau est relié au bras de serrage par l'intermédiaire d'une biellette de manière à faire pivoter le bras de serrage par effet de levier lors du coulissement du coulisseau ;
- chaque bras de serrage est monté pivotant autour d'un axe vertical ;
- l'élément d'actionnement comporte un excentrique à came qui est monté pivotant autour d'un axe vertical à proximité de l'axe de rotation de la pince tournante, l'excentrique à came étant en contact glissant avec une extrémité libre de chaque bras d'actionnement de manière à faire pivoter chaque bras de serrage par effet de levier lors du pivotement de l'excentrique à came ;
- la pince tournante est rappelée élastiquement vers sa position fermée ;
- chaque mors comporte un cran qui est destiné à recevoir un bourrelet extérieur annulaire du col de la préforme pour le blocage vertical de la préforme ;
- chaque mors s'étend sur un secteur angulaire qui est globalement inférieur à 90°.

D'autres caractéristiques et avantages de l'invention apparaîtront à la lecture de la description détaillée qui va suivre pour la compréhension de laquelle on se reportera aux dessins annexés parmi lesquels :
- la figure 1 est une vue de dessus qui représente partiellement une installation de conditionnement thermique de préformes ;
- la figure 2 est une vue de face qui représente un dispositif de transport de préforme pour l'installation de la figure 1, le dispositif comportant une pince de préhension réalisée selon un premier mode de réalisation de l'invention, la pince étant en position fermée sur une préforme ;
- la figure 3 est une vue en perspective éclatée qui représente le dispositif de transport de la figure 2 ;
- la figure 4 est une vue similaire à celle de la figure 2 qui représente la pince de préhension en position ouverte ;
- la figure 5 est une vue de côté du dispositif de préhension similaire de la figure 4 dans laquelle un support de la pince de préhension n'a pas été représenté ;
- la figure 6 est une vue similaire à celle de la figure 5 dans laquelle la pince de préhension est en position fermée ;
- la figure 7 est une vue en coupe selon le plan de coupe 7-7 de la figure 4 ;
- la figure 8 est une vue en coupe de la pince de la figure 6 selon un plan de coupe transversal passant par l'axe de rotation de la pince de préhension ;
- la figure 9 est une vue de dessus qui représente un col de préforme saisie simultanément par des tenailles d'une roue de transfert et par des mors d'une pince de préhension d'un dispositif de transport réalisé selon l'invention ;
- la figure 10 est une vue de face en regardant l'installation de la figure 1 selon la flèche 10 de la figure 1 ;
- la figure 11 est une vue en section selon le plan de coupe horizontal 11-11 de la figure 10 ;
- la figure 12 est une vue de côté qui représente la pince de préhension d'un dispositif de transport de préforme réalisé selon un deuxième mode de réalisation de l'invention, la pince de préhension étant en position fermée sur une préforme ;
- la figure 13 est une vue similaire à celle de la figure 12 qui représente la pince de préhension dans une position ouverte ;
- la figure 14 est une vue en perspective qui représente la pince de préhension d'un dispositif de transport de préforme réalisé selon un troisième mode de réalisation de l'invention, la pince de préhension étant en position fermée sur une préforme ;
- la figure 15 est une vue similaire à celle de la figure 14 qui représente la pince de préhension sous un angle opposé à celui de la figure 14 ;
- la figure 16 est une vue en coupe selon le plan de coupe 16-16 de la figure 14 ;
- la figure 17 est une vue similaire à celle de la figure 15 dans laquelle la pince de préhension occupe une position ouverte ;
- la figure 18 est une vue en coupe selon le plan de coupe 18-18 de la figure 17.

Dans la suite de la description des éléments présentant des fonctions identiques, analogues ou similaires seront désignés par des mêmes numéros de référence.

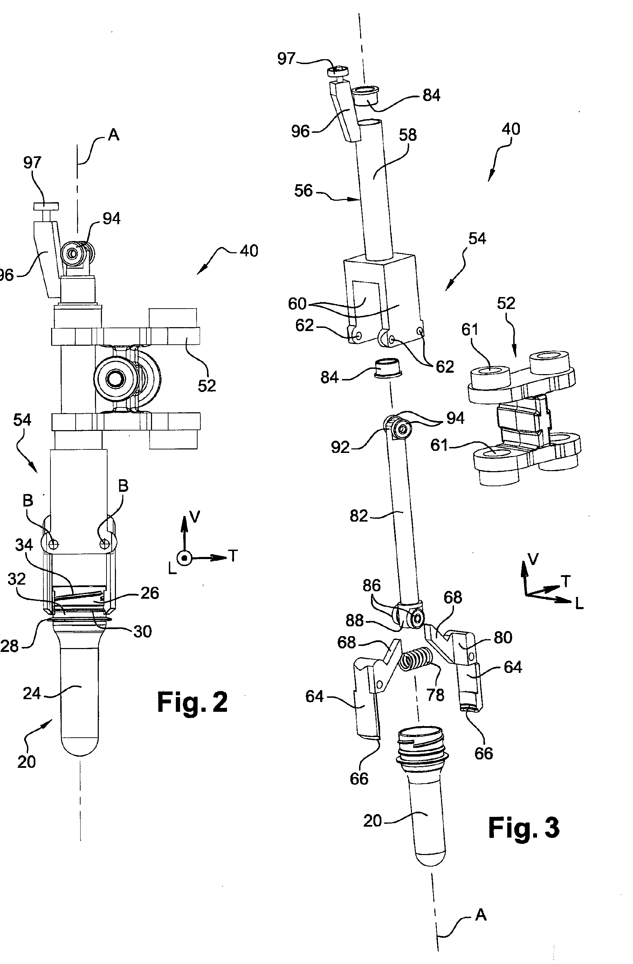

Dans la suite de la description, on adoptera à titre non limitatif pour chaque pince de préhension des orientations longitudinale, verticale et transversale indiquées par le trièdre "L,V,T" des figures 2 à 18. Chaque orientation sera plus particulièrement fixe par rapport aux pinces de préhension décrites par la suite.

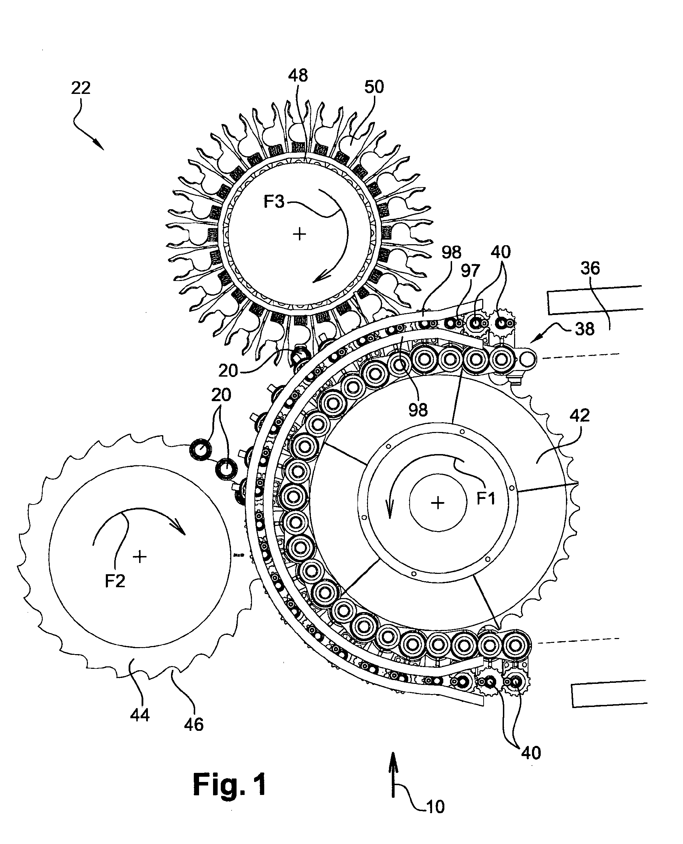

On a représenté à la figure 2 une préforme 20 en matériau thermoplastique destinée à être conformée en un récipient final tel qu'une bouteille. La préforme 20 est destinée à être conditionnée thermiquement, c'est-à-dire chauffée, par une installation 22 de conditionnement thermique qui a été représentée partiellement à la figure 1.

La préforme 20 présente un corps 24 cylindrique tubulaire d'axe principal vertical "A" qui est fermé à son extrémité inférieure. L'extrémité supérieure du corps 24 est prolongée par un col 26, lui aussi tubulaire. Le corps 24 et le col 26 sont séparés par une collerette 28 qui s'étend radialement vers l'extérieur.

La face cylindrique externe du col 26 présente un bourrelet 30 qui s'étend radialement vers l'extérieur juste au-dessus de la collerette 28. Le bourrelet 30 et la collerette 28 délimitent ainsi verticalement une gorge 32 dite "d'inviolabilité".

La face cylindrique externe du col 26 comporte aussi, au-dessus du bourrelet 30, des filets 34 qui s'étendent radialement vers l'extérieur.

Selon une variante non représentée de l'invention, le col ne comporte pas de filets.

L'installation 22 de conditionnement thermique représentée à la figure 1 comporte ici un four 36 en forme de tunnel qui est destiné à chauffer le corps 24 de chaque préforme 20 avant leur conformation par soufflage par une station de soufflage (non représentée).

L'installation 22 de conditionnement thermique est apte à conditionner thermiquement des préformes 20 avec une cadence élevée. A cet effet, les préformes 20 sont guidées une par une jusqu'au four 36 à l'intérieur duquel elles défilent l'une à la suite de l'autre le long d'un trajet de chauffage. Le chauffage a ainsi lieu pendant le défilement des préformes 20 dans le four 36 en forme de tunnel.

Pour le défilement des préformes 20, le four 36 comporte une chaîne 38 de dispositifs 40 de transport, chaque dispositif 40 de transport étant apte à transporter une préforme 20 le long de son trajet. Les dispositifs 40 de transport sont ainsi mobiles le long d'une trajectoire fermée.

Le four 36 comporte aussi des moyens (non représentés) fixes de protection thermique du col 26 des préformes 20. Les moyens de protection thermique sont par exemple formés par des rails horizontaux qui sont agencés dans le four 26 latéralement de part et d'autre du trajet des préforme 20. Les rails sont agencés juste au-dessous de la collerette 28 de manière à former un bouclier thermique pour le col 26.

La chaîne 38 est guidée en rotation par un tambour 42 horizontal de guidage qui est monté tournant autour d'un axe vertical dans un sens anti-horaire en se référant à la figure 1, comme indiqué par la flèche "F1".

Les préformes 20 sont amenées l'une après l'autre jusqu'à la chaîne 38 au moyen d'une roue 44 horizontale de transfert qui est agencée à proximité du tambour 42 de guidage de la chaîne 38. Cette roue 44 de transfert sera appelée par la suite "roue 44 d'alimentation".

La roue 44 d'alimentation est montée à rotation autour d'un axe vertical dans un sens horaire selon la figure 1, comme indiqué par la flèche "F2". La périphérie de la roue 44 d'alimentation comporte une pluralité d'encoches 46 ouvertes horizontalement vers l'extérieur.

Chacune de ces encoches 46 est apte à recevoir une préforme 20. Chaque préforme 20 est retenue verticalement vers le bas par contact entre la collerette 28 et une face supérieure de la roue 44 d'alimentation.

Ainsi, chaque préforme 20 est transportée par la roue 44 d'alimentation selon une trajectoire de transfert en arc de cercle s'étendant dans un plan horizontal.

Un rail fixe (non représenté) s'étend aussi vers l'extérieur en regard des encoches le long de la trajectoire de transfert pour retenir radialement les préformes 20 dans les encoches 46.

La roue 44 d'alimentation est agencée de manière que la trajectoire de transfert des préformes 20 soit tangente à la trajectoire des dispositifs 40 de transport en vue de dessus, comme représenté à la figure 1. Ce point de tangence forme la zone de vêtissage des préformes 20.

Selon une variante non représentée de l'invention, la trajectoire de transfert des préformes et la trajectoire des dispositifs de transport sont superposée sur une distance déterminée.

L'installation 22 comporte aussi une deuxième roue 48 de transfert qui est agencée à la sortie du four 36 à proximité du tambour 42 de guidage de la chaîne 38 pour recueillir les préformes 20 après leur conditionnement thermique. Cette roue 48 de transfert sera appelée par la suite "roue 48 de sortie".

Cependant, à la différence de la roue 44 d'alimentation, la roue 48 de sortie comporte à sa périphérie des tenailles 50 qui s'étendent horizontalement vers l'extérieur et dont chacune est apte à saisir par sa gorge 32 d'inviolabilité une préforme 20 conditionnée thermiquement.

La roue 48 de sortie est agencée de manière analogue à la roue 44 d'alimentation par rapport à la trajectoire des dispositifs 40 de transport. Ainsi, les tenailles 50 suivent une trajectoire circulaire dans un sens horaire selon la figure 1, comme indiqué par la flèche "F3". Ladite trajectoire qui s'étend dans un plan horizontal de manière tangente à la trajectoire des dispositifs 40 de transport. Ce point de tangence forme une zone de "dévêtissage".

Lors de leur transport dans la zone de dévêtissage, les préformes 20 ainsi prises par les tenailles 50 à la sortie du four 36 sont transportées par la roue 48 de sortie vers la station de soufflage.

On a représenté aux figures 2 à 11 un dispositif 40 de transport d'une préforme 20 tubulaire réalisé selon un premier mode de réalisation de l'invention.

Comme représenté à la figure 2, le dispositif 40 de transport comporte principalement une platine 52 et une pince 54 de préhension d'une préforme 20, la pince 54 de préhension étant monté sur la platine 52 tournante autour d'un axe "A" vertical de rotation. Chaque dispositif 40 de transport permet ainsi l'entraînement en rotation d'une préforme 20 autour de son axe principal pendant son défilement à l'intérieur du four 36 pour assurer un chauffage homogène du corps 24 de la préforme 20.

La platine 52 forme ici un maillon qui est destiné à être articulé à d'autres maillons complémentaires pour former une chaîne 38 fermée articulée au moins dans un plan horizontal.

Comme représenté plus en détail à la figure 3, la pince 54 tournante comporte un support 56. Le tronçon d'extrémité supérieur du support 56 est formé par un tube 58 d'axe vertical "A". Le tronçon d'extrémité inférieur du support 56 présente une forme de "U" ouvert vers le bas qui est délimité latéralement par deux flasques 60 parallèles. Chaque flasque 60 s'étend dans un plan transversal vertical. L'extrémité inférieure du tube 58 débouche entre les deux flasques 60.

Le tube 58 est destiné à être reçu en rotation dans des trous 61 associés de la platine 52 autour de l'axe "A" vertical de rotation. Le support 56 est fixe verticalement par rapport à la platine 52.

Chaque flasque 60 comporte deux orifices 62 inférieurs qui sont agencés transversalement de part et d'autre et à distance de l'axe de rotation "A". Chaque orifice 62 d'un flasque 60 est agencé longitudinalement en vis-à-vis d'un orifice 62 de l'autre flasque 60.

La pince 54 comporte en outre deux bras 64 de serrage identiques. Un seul bras 64 de serrage sera donc décrit par la suite, la description s'appliquant à l'autre bras 64 de serrage.

Chaque bras 64 de serrage s'étend selon un axe principal vertical. L'extrémité inférieure libre du bras 64 de serrage inférieur forme un mors 66. La forme des mors 66 sera décrite plus en détail par la suite.

Comme représenté à la figure 2, chaque bras 64 de serrage est monté pivotant autour d'un axe "B" longitudinal de pivotement sur le support 56 par l'intermédiaire de l'extrémité supérieure du bras 64 de serrage. A cet effet, l'extrémité supérieure de chaque bras 64 de serrage est agencée entre les flasques 60 du support 56 entre deux orifices 62 en vis-à-vis. Chaque bras 64 de serrage s'étend ainsi verticalement vers le bas de manière saillante au-dessous du support 56.

Le montage pivotant des bras 64 de serrage est par exemple réalisé par une goupille (non représentée) qui traverse le bras 64 de serrage et les orifices 62 des flasques 60 ou par des tourillons longitudinaux qui sont insérés dans les orifices 62 en vis-à-vis des flasques 60.

Un bras 68 supérieur d'actionnement s'étend depuis l'extrémité supérieure du bras 64, 64B inférieur de serrage. Chaque bras 68 supérieur d'actionnement s'étend entre les deux flasques 60. Le bras 68 d'actionnement est lié rigidement au bras 64 de serrage associé pour former un levier.

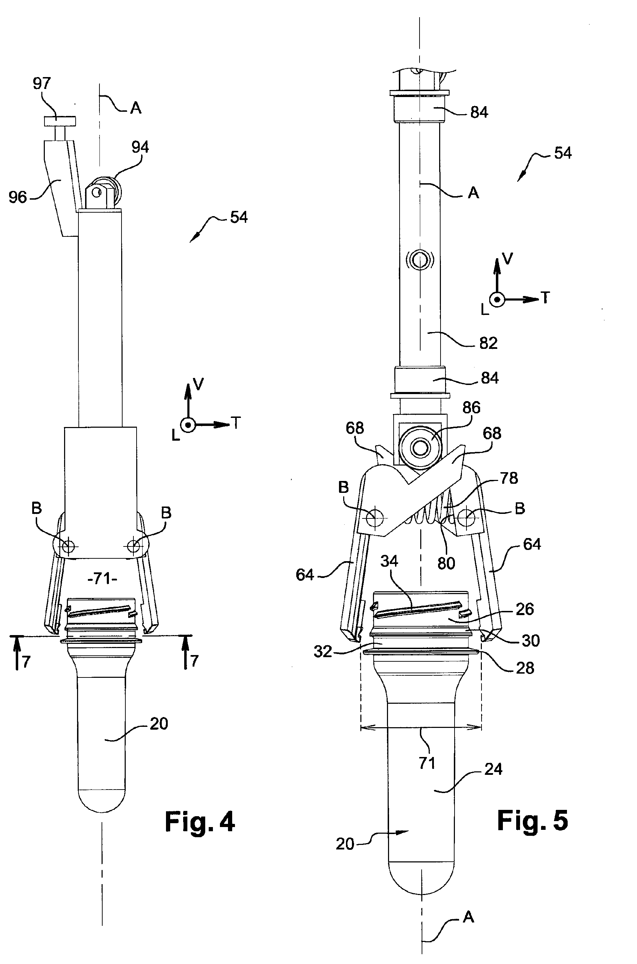

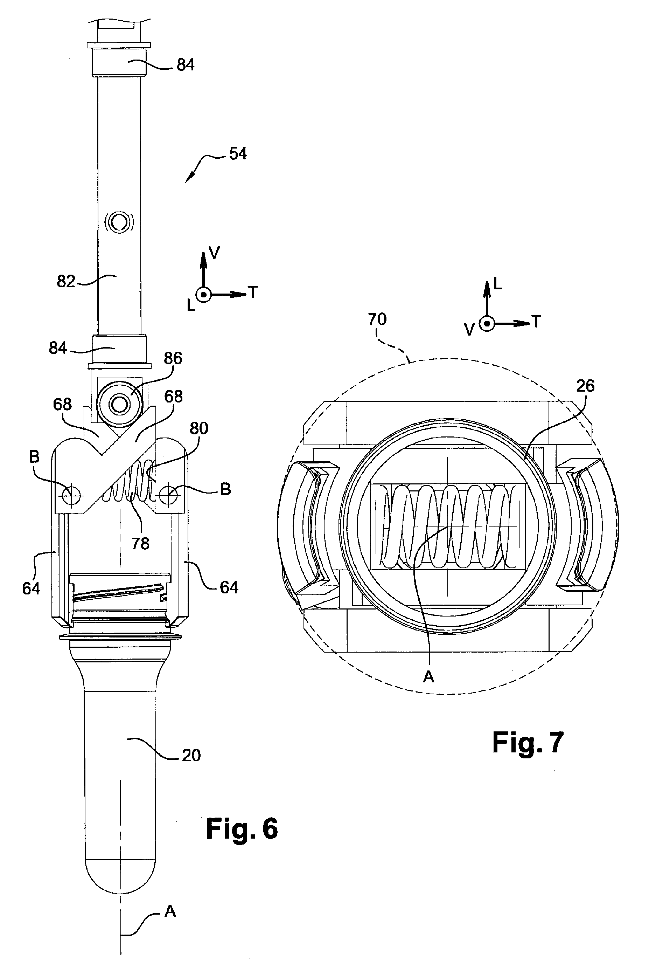

Comme cela est notamment visible aux figures 5 et 6, le bras 68 d'actionnement forme ici un doigt incliné dans un plan transversal vertical par rapport à la direction verticale en direction de l'axe "A" de rotation du support 56. Chaque bras 68 d'actionnement est suffisamment long pour croiser l'autre bras 68 d'actionnement au niveau de l'axe "A" de rotation du support 56 en vue de face, comme cela est représenté aux figures 5 et 6. Pour ne pas que les bras 68 d'actionnement n'interfèrent entre eux, le bras 68 d'actionnement du premier bras 64 de serrage est décalé longitudinalement par rapport au bras 68 d'actionnement du deuxième bras 64 de serrage.

Dans ce mode de réalisation les deux mors 66 sont mobiles selon une direction globalement transversale par pivotement de chaque bras 64 de serrage dans deux sens opposés.

Pour la suite de la description et pour les revendications, on définit un "espace de serrage 70" comme étant l'espace délimité horizontalement par un cercle centré sur l'axe "A" de rotation de la pince 54 et dont le rayon est égal à la distance transversale entre l'axe "A" de rotation et un mors 66 mobile en position ouverte de la pince 54. Cet espace de serrage 70 est délimité par un cercle en traits interrompus à la figure 7.

Le bras 68 d'actionnement est agencé à l'intérieur d'un volume délimité par un cylindre droit vertical, la directrice dudit cylindre étant formée par le contour de l'espace de serrage 70.

Le support 56 est ainsi agencé verticalement au droit de l'espace de serrage 70.

La pince 54 est ainsi susceptible d'occuper :
- une position ouverte, représentée aux figures 4, 5 et 7, dans laquelle les mors 66 sont écartés transversalement l'un de l'autre pour permettre l'insertion du col 26 de la préforme 20 entre les mors 66 dans l'espace de serrage 70 ; et
- une position fermée, représentée aux figures 2, 6, 8 et 9, dans laquelle les mors 66 sont rapprochés transversalement l'un de l'autre pour tenir, par serrage transversal entre les deux mors 66, le col 26 de la préforme 20, l'axe "A" principal de la préforme 20 ainsi serrée étant coaxial à l'axe "A" de rotation de la pince 54 tournante.

Comme illustré aux figures 4, 5 et 11, les mors 66 et les bras 64 de serrage de la pince 54 sont conçus et agencés de manière qu'en position ouverte de la pince 54, un passage 71 est réservé pour l'insertion latérale du col 26 de la préforme 20 entre les mors 66 selon une direction longitudinale. Ainsi, il n'est pas nécessaire de déplacer les mors 66 verticalement par rapport au col 26 de la préforme 20 pour effectuer une opération de vêtissage ou de dévêtissage. Du fait de la forme des mors 66 et de l'agencement des bras 64 de serrage en saillie au-dessous du support 56, on constate aux figures 4 et 5 que le col 26 de la préforme 20 est en effet susceptible d'être inséré ou retiré de l'espace de serrage 70 selon une direction longitudinale sans que le support 56 ou n'importe quel autre élément ne fasse obstruction.

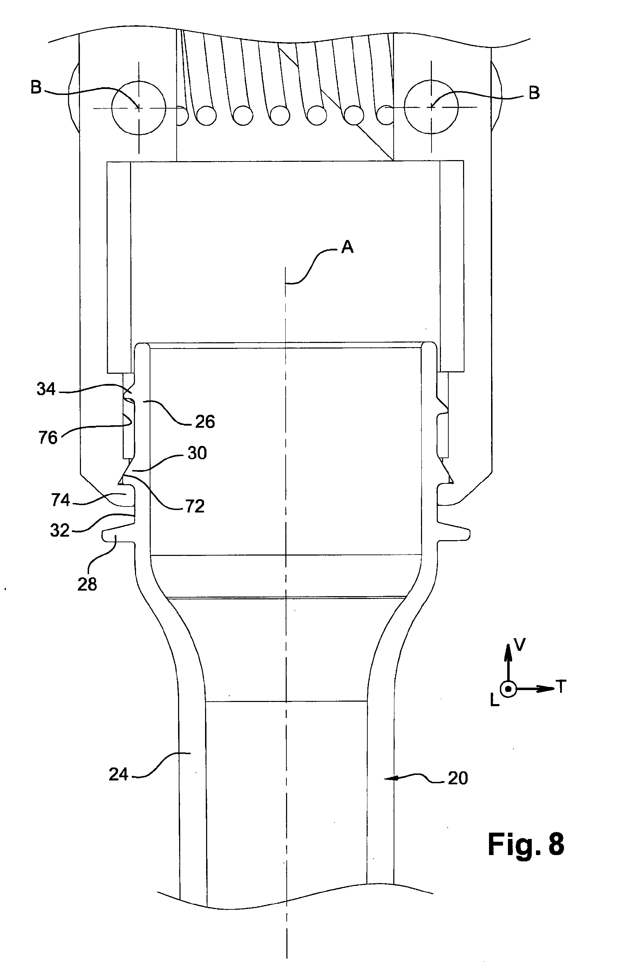

Comme représenté en détail à la figure 8, chaque mors 66 présente une forme cylindrique verticale. Le mors 66 est équipé d'un cran 72 destiné à recevoir le bourrelet 30 du col 26 de la préforme 20. Ainsi, une lèvre 74 inférieure libre du mors 66 est destinée à être insérée dans la gorge 32 d'inviolabilité.

Le cran 72 permet ainsi de bloquer verticalement dans les deux sens la préforme 20 par coopération de forme avec le bourrelet 30.

Selon une variante non représentée de l'invention, la lèvre inférieure libre du mors présente une forme complémentaire de la gorge délimitée par le bourrelet et la collerette. Ainsi, il n'y a pas besoin de forme qui coopère avec le dessus du bourrelet pour immobiliser verticalement la préforme, la préforme est immobilisée vers le bas par le contact entre la lèvre et le bourrelet tandis qu'elle est immobilisée vers le haut par le contact entre la lèvre et la collerette.

Au-dessus du cran 72, le mors 66 présente une face 76 verticale lisse qui présente une forme concave cylindrique et qui est destiné à venir en appui contre la partie supérieure du col 26 pour empêcher le balancement de la préforme 20 et ainsi maintenir la préforme 20 verticale.

S'agissant d'un col 26 muni de filets 34, la face 76 lisse du mors 66 est en appui contre la crête des filets 34.

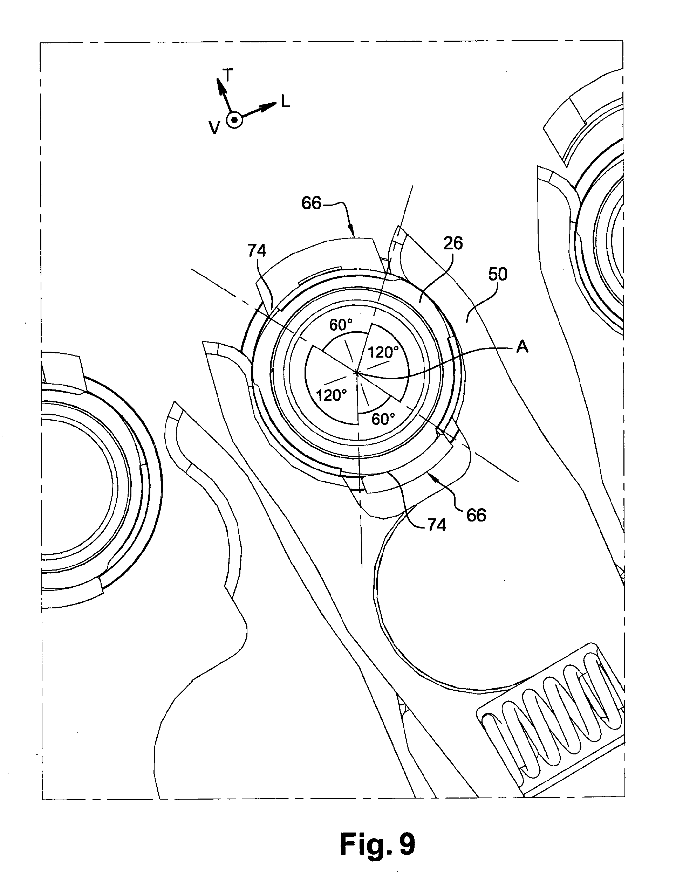

Comme représenté à la figure 9, en position fermée des mors 66, les deux mors 66 sont agencés de manière symétriquement opposée par rapport à l'axe "A" de rotation vertical. Chaque mors 66 s'étend sur une portion angulaire du col 26 autour de l'axe "A" de rotation.

Avantageusement, en position fermée de la pince 54, chaque mors 66 s'étend sur une section angulaire de moins de 90° (degrés) de manière à laisser libre deux sections angulaires de la gorge 32 d'inviolabilité circonférentiellement entre les lèvres 74 terminale des mors 66. Les deux sections angulaires libres sont agencées de manière symétriquement opposée par rapport à l'axe "A" vertical de rotation. Ainsi, les tenailles 50 de la roue 48 de sortie sont susceptibles d'être insérée dans les sections libres de la gorge 32 d'inviolabilité pendant que la préforme 20 en encore tenue par la pince 54 du dispositif 40 de transport, comme cela est illustré à la figure 9.

Dans l'exemple représenté à la figure 9, chaque mors 66 s'étend sur un secteur angulaire d'environ 60° autour de l'axe "A" de rotation, libérant ainsi des secteurs angulaires libres de 120° longitudinalement de part et d'autre de la gorge 32 d'inviolabilité.

La pince 54 est commandée entre ses positions ouverte et fermée par des moyens de commande qui sont à présent décrits en référence aux figures 3 ,5 et 6.

Les moyens de commande de la pince 54 tournante sont portés par le support 56 de manière solidaire en rotation autour de l'axe "A" avec la pince 54 tournante.

Pour des raisons de compacité radiale autour de l'axe "A" de rotation, les moyens de commande sont avantageusement compris à l'intérieur d'un volume délimité par un cylindre droit vertical, la directrice dudit cylindre étant formée par le contour de l'espace de serrage 70.

La pince 54 est notamment conçue de manière que les mors 66 soient rappelés élastiquement vers leur position fermée.

A cet effet, les moyens de commande comportent ici un unique ressort 78 hélicoïdal de compression qui est interposé transversalement entre deux faces 80 d'appui dont chacune est portée par un bras 64 de serrage associé. Les deux faces d'appui 80 sont décalées verticalement au-dessus de l'axe "B" de pivotement. Ainsi, lorsque les bras 64 de serrage sont commandés vers la position ouverte de la pince 54, les faces d'appui sont rapprochées l'une de l'autre, provoquant la compression du ressort 78, comme cela est représenté à la figure 5.

L'effort de rappel élastique du ressort 78 de rappel est ainsi transformé en effort de serrage du col de la préforme 20 lorsque les mors sont en position fermée.

Les moyens de commande comportent aussi un élément mobile d'actionnement qui forme un élément d'entrée d'un effort d'actionnement de la pince 54. L'effort d'actionnement est ici exercé mécaniquement depuis l'extérieur du dispositif 40 de transport.

Pour des raisons de compacités, l'élément d'actionnement est agencé verticalement au droit de l'espace de serrage 70.

L'élément d'actionnement est ici formé par un coulisseau 82 d'actionnement présentant une forme de tige verticale qui est montée coulissante axialement le long de l'axe de rotation "A" dans le tube 58 du support 56. A cet effet, deux manchons 84 de guidage en coulissement sont interposés radialement entre la face cylindrique interne du tube 58 et le coulisseau 82. Sur les vues des figures 5 et 6, le support 56 n'a pas été représenté afin de rendre visible les moyens de commande.

Les moyens de commande comportent des moyens pour transformer le mouvement de coulissement vertical du coulisseau 82 en mouvement de pivotement de chaque bras 64 de serrage entre les deux positions ouverte et fermée de la pince 54. A cet effet; l'extrémité inférieure du coulisseau 82 d'actionnement est constamment en contact avec une face supérieure de chaque bras 68 d'actionnement.

Ainsi, lorsque le coulisseau 82 d'actionnement coulisse verticalement vers le bas, il transmet l'effort d'actionnement verticalement vers le bas simultanément sur chacun des bras 68 d'actionnement. L'effort d'actionnement étant appliqué à distance transversale des deux axes de pivotement des bras 64 de serrage, chaque bras 64 de serrage pivote autour de son axe vers la position ouverte de la pince 54, à la manière d'un levier dit du "premier genre".

Le coulisseau 82 étant fixe transversalement, le point de contact du coulisseau 82 glisse le long de la face supérieur des bras 68 d'actionnement lors du pivotement des bras 64 de serrage. Pour diminuer l'usure et la résistance de ce glissement, le coulisseau 82 est avantageusement en contact avec chacun des bras 68 d'actionnement par l'intermédiaire d'un galet 86 inférieur de contact associé.

Ainsi, comme représenté aux figures 5 et 6, chaque galet 86 inférieur est monté pivotant autour d'un axe longitudinal à l'extrémité 88 inférieure du coulisseau 82. Les galets 86 inférieurs sont agencés longitudinalement de part et d'autre du coulisseau 82 de manière à être agencé en vis-à-vis de la face supérieure du bras 68 d'actionnement associé.

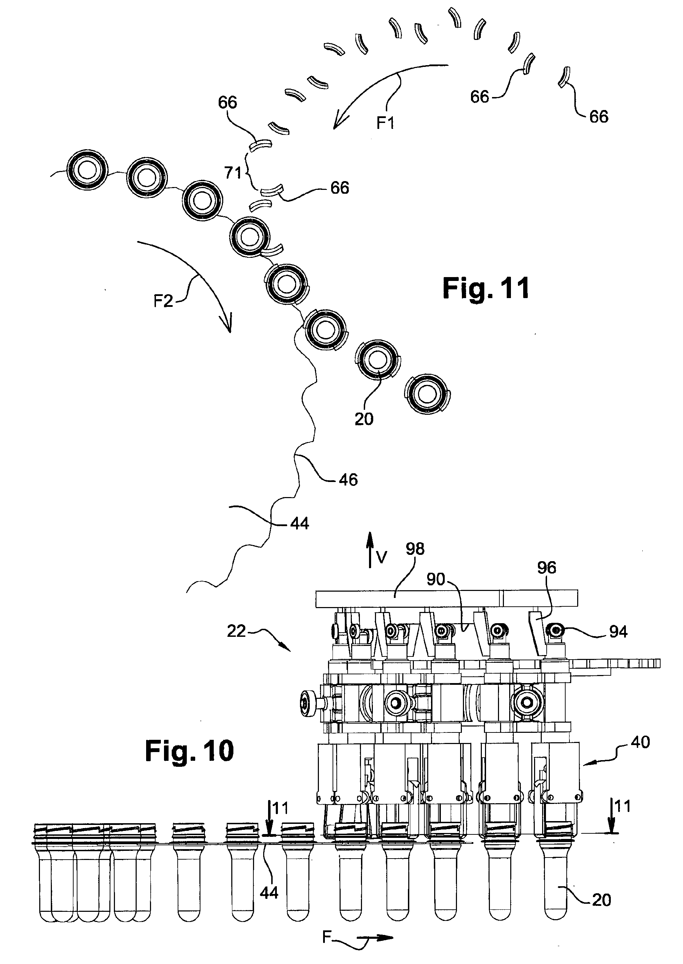

Comme cela est représenté à la figure 10, le coulissement vers le bas du coulisseau 82 d'actionnement est ici commandé par un chemin de came 90 qui est en contact avec l'extrémité 92 supérieure du coulisseau 82. Le chemin de came 90 est agencé de manière fixe le long de la trajectoire du dispositif 40 de transport, lorsque ces derniers passent par la zone de vêtissage et par la zone de dévêtissage. Ainsi, le coulisseau 82 d'actionnement forme un suiveur de came, et l'effort d'actionnement est exercé par le chemin de came 90 sur le coulisseau 82 d'actionnement lorsque la chaîne 38 est entraînée en rotation comme représenté par la flèche "F" de la figure 10.

La résistance due au contact entre le coulisseau 82 d'actionnement et le chemin de came 90 est ici réduite au moyen d'au moins un galet 94 supérieur d'actionnement qui est porté par l'extrémité supérieure du coulisseau 82 d'actionnement et qui est destiné à rouler le long du chemin de came 90.

Le coulisseau 82 d'actionnement est immobilisé en rotation autour de son axe "A" vertical par rapport au support 56 de la pince 54 du fait des couples antagonistes, c'est-à-dire de même intensité mais de sens opposé, exercés par le ressort 78, par l'intermédiaire des bras 64 de serrage, sur l'extrémité inférieure du coulisseau 82 d'actionnement. Ainsi, le coulisseau 82 d'actionnement tourne de manière solidaire avec la pince 54 de préhension autour de l'axe "A" de rotation.

Le dispositif 40 de transport comporte en outre des moyens d'indexation de la position angulaire de la pince 54 par rapport à la platine 52. Ceci permet, d'une part, d'orienter la pince 54 de manière que le col 26 de la préforme 20 soit inséré de manière latérale dans l'espace de serrage 70 et, d'autre part, d'orienter le galet 94 supérieur du coulisseau 82 d'actionnement de manière à rouler sur le chemin de came 90.

Comme représenté aux figures 2, 3, 4 et 10, les moyens d'indexation comportent ici un doigt 96 d'indexation qui est porté par le support 56. Le doigt 96 d'indexation s'étend verticalement vers le haut, et il est excentré radialement par rapport à l'axe "A" de rotation. Comme cela est illustré à la figure 1, l'extrémité supérieure 97 du doigt 96 d'indexation est destinée à être reçue entre deux rails 98 parallèles d'indexation qui sont agencés au-dessus de la portion du trajet des dispositifs 40 de transport située entre les deux zones de dévêtissage et de vêtissage selon le sens de déplacement des dispositifs 40 de transport. Les rails 98 d'indexation bloquent ainsi la rotation de la pince 54 de préhension dans les deux sens par contact avec le doigt 96 d'indexation lors du déplacement des dispositifs 40 de transport.

L'extrémité amont des rails 98 d'indexation, par rapport au sens de déplacement des dispositifs 40 de transport, forme un entonnoir qui est apte à intercepter le doigt d'indexation, quelle que soit sa position angulaire autour de l'axe "A" de rotation, afin d'amener progressivement la pince 54 de préhension dans une position angulaire adaptée au vêtissage et au dévêtissage.

Du fait de la symétrie des mors 66 de la pince 54 de préhension ainsi que du fait de la position à proximité de l'axe de rotation du galet 94 supérieur du coulisseau 82 d'actionnement, le dispositif 40 de transport réalisé selon ce premier mode de réalisation est avantageusement susceptible d'occuper deux positions à 180° qui sont chacune adaptées pour le transfert d'une préforme 20.

En outre, le chemin de came 90 est ici porté par le rail 98 d'indexation agencé à l'intérieur de la boucle formée par la chaîne 38.

On décrit à présent le fonctionnement du dispositif 40 de transport en référence aux figures 10 et 11. On a indiqué par des flèches le sens de déplacement des préformes 20 et des dispositifs 40 de transport.

Les mors 66 des dispositifs 40 de transport sont à la même hauteur que les cols 26 des préformes 20 lorsqu'ils arrivent dans la zone de vêtissage. Les seules actions effectuées sur la pince 54 de préhension sont l'indexation angulaire de la pince 54 autour de son axe "A" de rotation et l'ouverture des mors 66.

On a représenté à la figure 11 les positions des mors 66 le long de la trajectoire d'un dispositif 40 de transport avant, pendant et après la zone de vêtissage. Sur cette figure 11, le dispositif 40 de transport se déplace le long d'une trajectoire en arc de cercle dans le sens indiqué par la flèche "F1".

Comme représenté à la figure 11, lorsque le dispositif 40 de transport arrive dans la zone de vêtissage de manière synchrone avec une préforme 20 apportée par la roue 44 d'alimentation, les mors 66 sont orientés de manière que le col 26 de la préforme 20 pénètre longitudinalement dans la zone 70 de serrage par le passage 71 latéral. Puis, la forme du chemin de came 90 permet au ressort 78 de rappel de rappeler les mors vers leur position fermée en serrant le col de la préforme 20.

Le fait qu'il n'y ait pas de mouvement vertical de la pince 54 par rapport à la préforme 20 permet avantageusement d'éviter des problèmes de choc destructeurs avec le col 26.

En outre, la préhension par l'extérieur avec des mors 66 présentant une forme concave cylindrique complémentaire de la forme du col 26 permet de centrer la préforme 20 coaxialement à l'axe "A" de rotation de la pince 54 même lorsque la préforme 20 est légèrement décalée. Le col 26 d'une préforme 20 décalée ou légèrement désynchronisée est en effet centrée en glissant contre la face 76 lisse de chaque mors 66 lors de la fermeture de la pince 54.

Par ailleurs, l'agencement compact des moyens de commande et du support 56 à l'intérieur d'un volume délimité par cylindre vertical dont la génératrice est formée par les contours de l'espace de serrage 70 permet de réduire le pas entre deux dispositifs 40 de transport consécutifs de la chaîne 38. Cela procure deux avantages.

Tout d'abord, l'installation 22 de conditionnement est susceptible d'être utilisée de manière optimale et efficace.

On a en outre constaté que, pour un chauffage homogène des préformes 20, il est avantageux que le pas entre deux préformes 20 successives soit le plus petit possible.

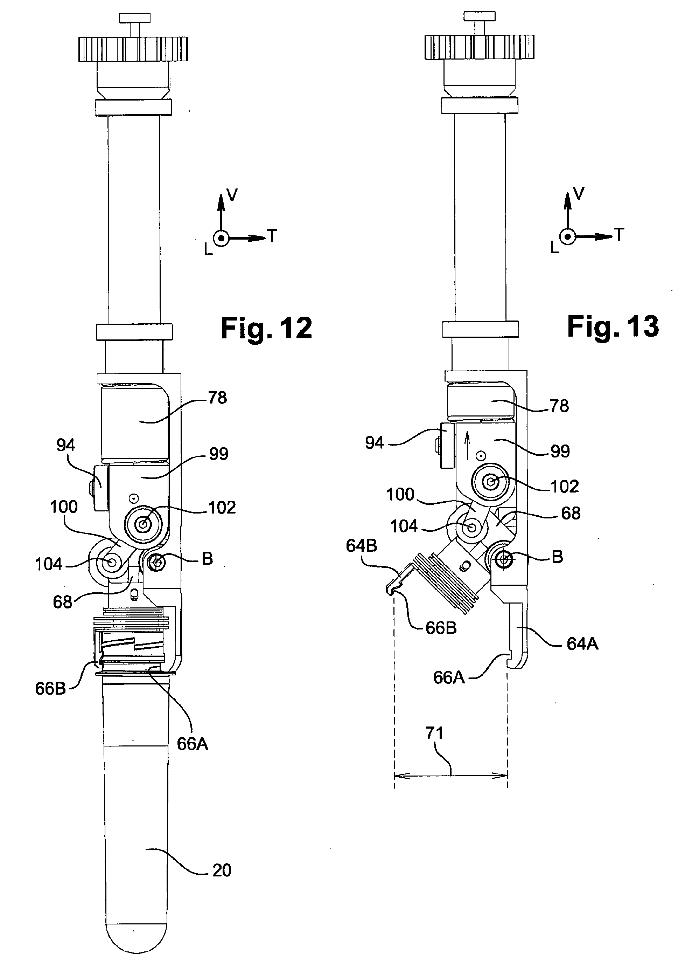

Un deuxième mode de réalisation de l'invention a été représenté aux figures 12 et 13. Ce deuxième mode de réalisation comporte des similarités avec le premier mode de réalisation. Par la suite, seules les différences entre ces deux modes de réalisation seront décrites en détail.

Dans ce deuxième mode de réalisation, l'élément d'actionnement est aussi monté coulissant verticalement par rapport au support 56. L'élément d'actionnement est ici formé par un coulisseau 99 qui n'a pas une forme de tige, mais qui présente un fonctionnement similaire à celui du coulisseau 82 du premier mode de réalisation.

La pince 54 ne comporte ici qu'un seul mors 66 mobile par rapport au support 56, l'autre mors étant fixe.

Le mors fixe sera par la suite désigné par la référence 66A. Le mors 66A fixe est ici lié par l'intermédiaire d'un bras 64A vertical fixe au support 56.

Le mors mobile sera désigné par la référence 66B, et le bras de serrage associé sera désigné par la référence 64B. Le bras 68 supérieur d'actionnement du bras 64B de serrage s'étend transversalement vers l'autre bras 64A fixe. Le bras 68 supérieur d'actionnement et le bras 64B de serrage sont liés rigidement entre eux en formant ici un angle droit. Le bras 68 supérieur d'actionnement et le bras 64B de serrage sont ici formé par une pièce unique.

Comme représenté aux figures 12 et 13, le bras 68 d'actionnement est ici destinée à recouvrir l'ouverture supérieure de la préforme 20.

Le bras 64B de serrage est ici monté pivotant autour d'un axe "B" de pivotement qui est agencé à l'extrémité libre du bras 68 de serrage.

On comprendra qu'un tel agencement avec un seul mors mobile est aussi susceptible d'être appliqué au premier mode de réalisation de l'invention.

Une telle pince 54 présente aussi un passage 71 pour permettre l'insertion latérale de la préforme 20 lorsqu'elle est en position ouverte.

La différence essentielle avec le premier mode de réalisation réside dans les moyens pour transformer le mouvement de coulissement vertical du coulisseau 99 en mouvement de pivotement du bras 64B de serrage entre les deux positions ouverte et fermée de la pince 54. Au lieu d'être en contact glissant avec chaque bras 64B de serrage, le coulisseau 99 est lié au bras 64B de serrage par l'intermédiaire d'une biellette 100.

Une première extrémité 102 de la biellette 100 est montée à rotation autour d'un axe longitudinal sur le coulisseau 99, ledit axe longitudinal étant fixe par rapport au coulisseau 99.

Une deuxième extrémité 104 de la biellette est montée à rotation autour d'un axe longitudinal qui est décalé transversalement par rapport à la première extrémité 102 de la biellette 100. La deuxième extrémité 104 inférieure de la biellette 100 est ici montée articulée autour d'un axe longitudinal sur une portion supérieure du bras 64B de serrage, ledit axe longitudinal étant fixe par rapport au bras 64B de serrage.

La biellette 100 est agencée de manière que ses deux extrémités 102, 104 ne soient jamais alignées avec l'axe "B" de pivotement du bras 64B de serrage pour éviter tout blocage des moyens de commande.

L'extrémité inférieure 104 de la biellette 100 est plus particulièrement montée sur le bras 64B de serrage avec un décalage transversal en direction du mors 66B dudit bras 64B de serrage par rapport à l'axe "B" de pivotement dudit bras 64B de serrage. Ainsi le bras 64B de serrage est tiré vers sa position ouverte lorsque le coulisseau 99 coulisse verticalement vers le haut. La biellette 100 travaille donc en traction pour l'ouverture de la pince 54. L'ensemble rigide formé par le bras de serrage 64B et le bras 68 d'actionnement forme ainsi un levier dit du "troisième genre" qui est actionné par la biellette 100.

Lorsque la pince 54 est commandée depuis sa position ouverte jusqu'à sa position fermée, un déplacement du coulisseau 99 selon une vitesse globalement uniforme vers le bas provoque un déplacement de vitesse non uniforme du bras de serrage 64B. En effet, au début du mouvement de fermeture, un déplacement du coulisseau 99 à une vitesse donnée entraîne un pivotement "rapide" du bras de serrage 64B avec un faible effort de serrage du mors 66B. A la fin du mouvement de fermeture, le déplacement du coulisseau 99 à ladite vitesse donné entraîne un pivotement "plus lent" du bras de serrage 64B avec un effort de serrage plus élevé du mors 66B.

Cette vitesse de pivotement variable du bras de serrage 64B permet d'avoir une grande ouverture de la pince 54 et donc un passage 71 latéral suffisamment grand pour la préforme 20 avec un seul mors mobile 66B.

En outre, l'effort de serrage augmenté en fin de fermeture permet de démultiplier l'effort de rappel exercé par le ressort 78 de rappel pour obtenir un effort de serrage suffisant pour tenir la préforme 20. Ceci permet d'agencer un ressort 78 de rappel présentant une élasticité plus grande que pour le premier mode de réalisation. Un tel ressort présente généralement une plus grande robustesse à la fatigue. Ceci est particulièrement avantageux dans un tel dispositif car le ressort de rappel est susceptible de subir de nombreux cycles de compression à cadence élevée.

Du fait de cette configuration, le ressort 78 de rappel est ici intercalé verticalement entre une face d'appui supérieure du coulisseau 99 et une face inférieure fixe du support 56 pour rappeler élastiquement le coulisseau 99 d'actionnement vers sa position inférieure correspondant à la position fermée de la pince 54.

Dans le mode de réalisation représenté aux figures 12 et 13, le galet 94 d'actionnement du coulisseau 99 est agencé longitudinalement en saillie par rapport au support 56 afin de coopérer avec le chemin de came 90.

Selon une variante non représentée de l'invention, le coulisseau présente la forme d'une tige similaire à celle du premier mode de réalisation et le galet d'actionnement est agencé à une extrémité supérieure de la tige qui dépasse au-dessus du support.

Selon une variante non représentée de l'invention, la biellette est agencée de manière à pousser le bras de serrage vers sa position ouverte lorsque l'élément d'actionnement coulisse verticalement vers le bas. Dans ce cas, la biellette travaille en compression pour ouvrir la pince.

Dans ce deuxième mode de réalisation, tous les éléments formant les moyens de commande de la pince 54 sont aussi agencés verticalement au-dessus de l'espace de serrage 70. Le dispositif 40 réalisé selon ce deuxième mode de réalisation procure ainsi les mêmes avantages que ceux du premier mode de réalisation.

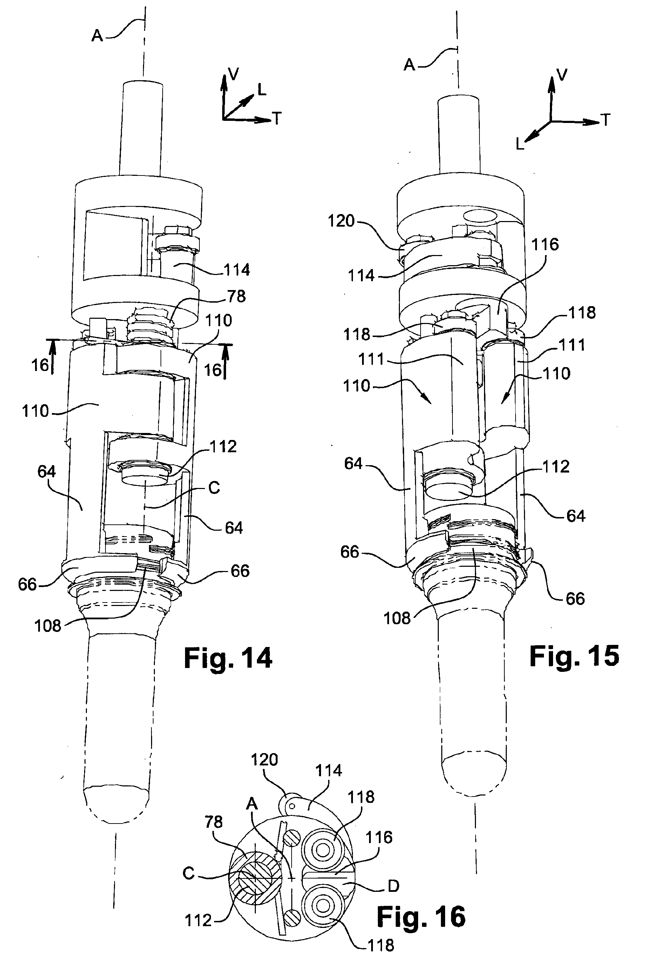

Un troisième mode de réalisation de l'invention a été représenté aux figures 14 à 18. Dans ce mode de réalisation, les deux mors 66 sont montés mobiles sur le support 56.

Comme dans le premier mode de réalisation, chaque mors 66 est agencé à l'extrémité inférieure d'un bras 64 de serrage globalement vertical. A la différence du premier mode de réalisation, les deux bras 64 de serrage sont ici montés pivotants autour d'un axe "C" vertical.

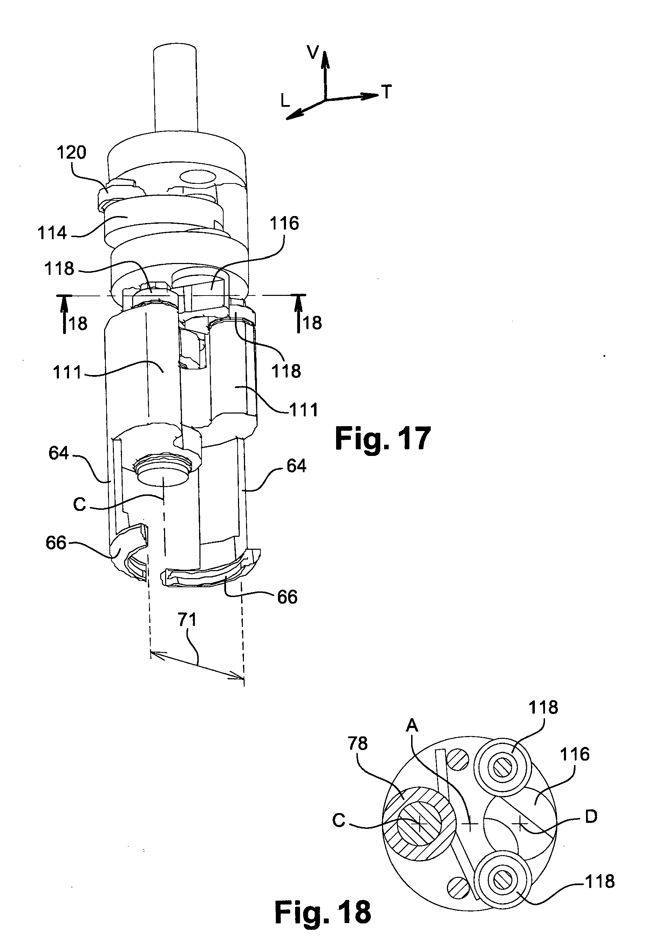

Contrairement aux deux premiers modes de réalisation, les mors 66 opposés présentent une symétrie par rapport à un plan axial longitudinal, mais pas une symétrie centrale par rapport à l'axe "A" de rotation. En position ouverte, comme illustrée à la figure 17, les mors 66 sont cependant écartés l'un de l'autre pour former un passage 71 suffisant afin de permettre l'insertion longitudinale du col 26 d'une préforme 20.

Ainsi, comme représenté aux figures 14 et 15, un secteur angulaire libre est plus grand que l'autre. Par la suite, on appellera le plus grand secteur angulaire libre "secteur 106 angulaire d'entrée" et le plus petit secteur angulaire libre "secteur 108 angulaire de jonction". Bien que les deux mors 66 ne se touchent pas selon une direction circonférentielle lorsque la pince 54 occupe une position fermée, le secteur 108 angulaire de jonction ne permet pas le passage du col 26 de la préforme 20.

Avantageusement, le secteur 108 angulaire de jonction est suffisamment étendu pour permettre à la préforme 20 d'être saisie par des tenailles 50 d'une roue 48 de sortie pendant qu'elle est encore tenue par la pince 54 du dispositif 40 de transport.

Les deux bras 64 de serrage partagent plus particulièrement le même axe "C" de pivotement qui est agencé au droit du secteur 108 angulaire de jonction, comme illustré à la figure 14.

Comme représenté aux figures 14 et 15, l'extrémité supérieure de chaque bras 64 de serrage est prolongé par un bras 68 d'actionnement horizontal qui s'étend depuis l'axe "C" de pivotement longitudinalement jusqu'à une extrémité libre 111 agencée au droit du secteur 106 angulaire d'entrée.

Les deux bras 64 de serrage sont fixés au support 56 par l'intermédiaire d'un goujon 112 d'axe "C" qui traverse la charnière et qui est fixé par son extrémité supérieure au support 56. L'extrémité inférieure du goujon comporte des moyens de blocage vertical des bras 64 de serrage, tel qu'une tête plate, un anneau élastique, ou tout autre moyen équivalent connu.

La pince 54 est ici rappelée élastiquement vers sa position fermée par un ressort 78 de torsion qui est agencé autour d'une portion de l'axe "C" de la charnière. Chacune des deux extrémités libres du ressort de torsion prend appui sur un ergot d'un bras 64 de serrage associé, ledit ergot étant excentré par rapport à l'axe "C" de la charnière.

L'élément d'actionnement est ici formé par un culbuteur 114 d'axe principal globalement radial qui est monté pivotant autour d'un axe "D" vertical par son extrémité intérieure. L'axe "D" de pivotement du culbuteur 114 est plus particulièrement agencé entre les deux portions 111 libres des bras 64 de serrage, de manière diamétralement opposée à l'axe "C" de la charnière.

L'extrémité intérieure du culbuteur entraîne en rotation autour de l'axe "D" un excentrique à came 116 qui est susceptible de coopérer de manière glissante avec les portions libres 111 des bras 64 de serrage pour commander les pinces 54 vers leur position ouverte à l'encontre de l'effort de rappel élastique du ressort 78. Ainsi, la portion libre 111 de chaque bras 64 de serrage forme un suiveur de came. L'excentrique à came 116 permet ainsi de transformer le mouvement de basculement du culbuteur 114 en mouvement de pivotement des bras 64 de serrage entre les deux positions ouverte et fermée de la pince 54.

Pour faciliter le glissement des bras 64 de serrage sur l'excentrique à came 116, chaque bras 64 de serrage comporte un galet 118 monté à rotation autour d'un axe vertical de manière à rouler sur une face verticale périphérique de l'excentrique à came 116, comme cela est représenté aux figures 16 et 18.

Le profil de l'excentrique à came 116 comporte en outre un profil qui permet d'avoir une ouverture symétrique des mors 66. Le profil de l'excentrique à came 116 est notamment conçu de manière que les galets 118 soient toujours agencés à distance égale de l'axe "C" quelle que soit la position angulaire de l'excentrique à came 116. A cet effet, l'excentrique à came 116 présente ici un profil asymétrique.

La deuxième extrémité extérieure 120 du culbuteur 114 s'étend en saillie radialement par rapport au support 56 de manière que cette deuxième extrémité 120 soit susceptible d'être rabattue vers l'intérieur par un chemin de came (non représenté) avec pivotement du culbuteur pour provoquer l'ouverture de la pince 54.

Grâce aux dispositifs 40 de transport réalisés selon l'un quelconque des modes de réalisation de l'invention, les préformes sont susceptibles d'être saisies sur la roue 44 d'alimentation ou chargées sur la roue 48 de sortie sans mouvement vertical de la pince 54 de préhension par rapport à la roue 44 d'alimentation ou par rapport à la roue 48 de sortie.

Le fait qu'il n'y ait pas de mouvement vertical de la pince 54 par rapport à la préforme 20 permet avantageusement d'éviter des problèmes de choc destructeurs avec le col 26.

En outre, la préhension par l'extérieur avec des mors 66 présentant une forme concave cylindrique complémentaire de la forme du col 26 permet de centrer la préforme 20 coaxialement à l'axe "A" de rotation de la pince 54 même lorsque la préforme 2à est légèrement décalée. Le col 26 d'une préforme 20 décalée ou légèrement désynchronisée est en effet centrée en glissant contre la face 76 lisse de chaque mors 66 lors de la fermeture de la pince 54.

Par ailleurs, l'agencement compact des moyens de commande et du support 56 à l'intérieur d'un volume délimité par cylindre vertical dont la génératrice est formée par les contours de l'espace de serrage 70 permet de réduire le pas entre deux dispositifs 40 de transport consécutifs de la chaîne 38. Cela procure deux avantages.

Tout d'abord, l'installation 22 de conditionnement est susceptible d'être utilisée de manière optimale et efficace.

On a en outre constaté que, pour un chauffage homogène des préformes 20, il est avantageux que le pas entre deux préformes 20 successives soit le plus petit possible.

De plus, le pas réduit entre deux dispositifs 40 de transport consécutifs permet d'améliorer le rendement du four en évitant de perdre de l'énergie pour chauffer un grand espace d'air entre deux préformes successives éloignées.

En conséquence, ceci permet avantageusement de diminuer la longueur totale des fours. Ceci permet notamment de concevoir des installations de fabrication de récipients moins onéreuses et plus faciles à transporter et à installer.

## Revendications

1. Dispositif (40) pour le transport d'une préforme (20) tubulaire avec rotation de la préforme (20) autour de son axe (A) principal vertical, le dispositif (40) comportant :
- une pince (54) de préhension de la préforme (20) extérieurement par son col (26), la pince (54) étant montée tournante autour d'un axe (A) vertical de rotation sur une platine (52) de manière à faire tourner la préforme (20) saisie autour de son axe (A) principal ;
- un premier mors (66, 66A) et un deuxième mors (66, 66B) opposé de la pince (54) dont chacun est destiné à coopérer avec un secteur angulaire de la face externe du col (26) de la préforme (20), au moins l'un des deux mors (66, 66B) étant mobile selon une direction globalement orthogonale à l'axe (A) de rotation de la pince (54) ;
- des moyens de commande de la pince entre :
-- une position ouverte dans laquelle les mors (66, 66A, 66B) sont écartés l'un de l'autre pour permettre l'insertion du col (26) de la préforme (20) entre les mors (66, 66A, 66B) dans un espace de serrage (70) ;
-- une position fermée dans laquelle les mors (66, 66A, 66B) sont rapprochés l'un de l'autre pour saisir, par serrage transversal entre les deux mors (66, 66A, 66B), le col (26) de la préforme (20) préalablement inséré ;
**caractérisé en ce que**, en position ouverte de la pince (54), un passage (71) est réservé pour l'insertion latérale du col (26) de la préforme (20) entre les mors (66, 66A, 66B) selon une direction orthogonale à l'axe (A) de rotation de la pince (54), et **en ce que** le dispositif (40) comporte des moyens d'indexation angulaire de la pince (54) pour permettre d'orienter la pince (54) de manière que le col (26) de la préforme (20) soit inséré de manière latérale dans l'espace de serrage (70).

2. Dispositif (40) selon la revendication précédente, **caractérisé en ce que** la pince (54) tournante comporte un support (56) supérieur qui s'étend verticalement au droit de l'espace de serrage (70), et **en ce que** les moyens de commande de la pince (54) tournante sont portés par le support (56) de manière solidaire en rotation avec la pince (54) tournante.

3. Dispositif (40) selon la revendication précédente, **caractérisé en ce que** chaque mors (66, 66B) mobile est formé par une extrémité inférieure d'un bras (64, 64B) de serrage globalement vertical monté mobile sur le support (56) supérieur, et **en ce qu'**un bras (68) supérieur d'actionnement s'étend depuis l'extrémité supérieure du bras (64, 64B) inférieur de serrage, le bras (68) d'actionnement étant agencé à l'intérieur d'un volume délimité par un cylindre droit vertical, la directrice dudit cylindre étant formée par le contour de l'espace de serrage (70).

4. Dispositif (40) selon la revendication précédente, **caractérisée en ce que** les moyens de commande comportent un élément (82, 99, 114) mobile d'actionnement qui est apte à transmettre mécaniquement un effort exercé depuis l'extérieur de la pince (54) tournante jusqu'à chaque bras (64, 64B) mobile de serrage pour écarter les mors (66, 66B) en position ouverte, l'élément (82, 99, 114) d'actionnement étant agencé verticalement au droit de l'espace de serrage.

5. Dispositif (40) selon la revendication précédente, **caractérisé en ce que** chaque bras (64, 64B) de serrage est monté pivotant à la manière d'un levier autour d'un axe (B) longitudinal sur le support (56).

6. Dispositif (40) selon la revendication précédente, **caractérisé en ce que** l'élément d'actionnement est formé par un coulisseau (82, 99) qui est monté coulissant verticalement à proximité de l'axe (A) de rotation de la pince (54) de préhension, les moyens de commande comportant des moyens pour transformer le mouvement de coulissement vertical du coulisseau (82, 99) en mouvement de pivotement de chaque bras (64, 64B) de serrage entre les deux positions ouverte et fermée de la pince (54).

7. Dispositif (40) selon la revendication précédente, **caractérisé en ce que** le coulisseau (82) est en contact de manière glissante avec une face supérieure de chaque bras (68) d'actionnement de manière à appuyer verticalement contre ladite face pour faire pivoter le bras (64) de serrage associé par effet de levier vers la position ouverte de la pince (54) tournante.

8. Dispositif (40) selon la revendication 6, **caractérisé en ce que** le coulisseau (99) est relié au bras (64B) de serrage par l'intermédiaire d'une biellette (100) de manière à faire pivoter le bras (64B) de serrage par effet de levier lors du coulissement du coulisseau (99).

9. Dispositif (40) selon la revendication 4, **caractérisé en ce que** chaque bras (64) de serrage est monté pivotant autour d'un axe (C) vertical.

10. Dispositif (40) selon la revendication précédente, **caractérisé en ce que** l'élément d'actionnement comporte un excentrique à came (116) qui est monté pivotant autour d'un axe (D) vertical à proximité de l'axe (A) de rotation de la pince (54) tournante, l'excentrique à came (116) étant en contact glissant avec une extrémité libre de chaque bras (68) d'actionnement de manière à faire pivoter chaque bras (64) de serrage par effet de levier lors du pivotement de l'excentrique à came (116).

11. Dispositif (40) selon l'une quelconque des revendications précédentes, **caractérisé en ce que** la pince (54) tournante est rappelée élastiquement vers sa position fermée.

12. Dispositif (40) selon l'une quelconque des revendications précédentes, **caractérisé en ce que** chaque mors (66, 66A, 66B) comporte un cran (72) qui est destiné à recevoir un bourrelet (30) extérieur annulaire du col (26) de la préforme (20) pour le blocage vertical de la préforme (20).

13. Dispositif (40) selon l'une quelconque des revendications précédentes, **caractérisé en ce que** chaque mors (66, 66A, 66B) s'étend sur un secteur angulaire qui est globalement inférieur à 90°.

## Patentansprüche

1. Vorrichtung (40) zum Transport einer rohrförmigen Vorform (20) mit Drehung der Vorform (20) um ihre senkrechte Hauptachse (A), wobei die Vorrichtung (40) aufweist:
- einen Greifer (54) zum Ergreifen der Vorform (20) außen über ihren Hals (26), wobei der Greifer (54) um eine senkrechte Drehachse (A) drehend auf eine Platte (52) montiert ist, um die ergriffene Vorform (20) um ihre Hauptachse (A) zu drehen;
- eine erste Backe (66, 66A) und eine zweite gegenüberliegende Backe (66, 66B) des Greifers (54), die je dazu bestimmt sind, mit einem Winkelsektor der Außenseite des Halses (26) der Vorform (20) zusammenzuwirken, wobei mindestens eine der zwei Backen (66, 66B) in einer zur Drehachse (A) des Greifers (54) global orthogonalen Richtung beweglich ist;
- Steuereinrichtungen des Greifers zwischen:
-- einer offenen Stellung, in der die Backen (66, 66A, 66B) voneinander entfernt sind, um das Einfügen des Halses (26) der Vorform (20) zwischen die Backen (66, 66A, 66B) in einem Einspannbereich (70) zu erlauben;
-- einer geschlossenen Stellung, in der die Backen (66, 66A, 66B) einander angenähert sind, um durch Quereinspannen zwischen den zwei Backen (66, 66A, 66B) den vorher eingefügten Hals (26) der Vorform (20) zu ergreifen;
**dadurch gekennzeichnet, dass** in der offenen Stellung des Greifers (54) ein Durchgang (71) für die seitliche Einfügung des Halses (26) der Vorform (20) zwischen die Backen (66, 66A, 66B) gemäß einer Richtung orthogonal zur Drehachse (A) des Greifers (54) freigehalten wird, und dass die Vorrichtung (40) Winkelindexierungseinrichtungen des Greifers (54) aufweist, um es zu ermöglichen, den Greifer (54) so auszurichten, dass der Hals (26) der Vorform (20) seitlich in den Einspannbereich (70) eingefügt wird.

2. Vorrichtung (40) nach dem vorhergehenden Anspruch, **dadurch gekennzeichnet, dass** der Drehgreifer (54) einen oberen Träger (56) aufweist, der sich senkrecht vor dem Einspannraum (70) erstreckt, und dass die Steuereinrichtungen des Drehgreifers (54) vom Träger (56) in Drehung fest mit dem Drehgreifer (54) verbunden getragen werden.

3. Vorrichtung (40) nach dem vorhergehenden Anspruch, **dadurch gekennzeichnet, dass** jede bewegliche Backe (66, 66B) von einem unteren Ende eines global senkrechten Einspannarms (64, 64B) geformt wird, der beweglich auf den oberen Träger (56) montiert ist, und dass ein oberer Betätigungsarm (68) sich vom oberen Ende des unteren Einspannarms (64, 64B) erstreckt, wobei der Betätigungsarm (68) im Inneren eines von einem senkrechten geraden Zylinder begrenzten Volumens angeordnet ist, wobei die Mantellinie des Zylinders vom Umriss des Einspannraums (70) geformt wird.

4. Vorrichtung (40) nach dem vorhergehenden Anspruch, **dadurch gekennzeichnet, dass** die Steuereinrichtungen ein bewegliches Betätigungselement (82, 99, 114) aufweisen, das mechanisch eine von außerhalb des Drehgreifers (54) ausgeübte Kraft bis zu jedem beweglichen Einspannarm (64, 64B) übertragen kann, um die Backen (66, 66B) in die offene Stellung zu spreizen, wobei das Betätigungselement (82, 99, 114) senkrecht vor dem Einspannraum angeordnet ist.

5. Vorrichtung (40) nach dem vorhergehenden Anspruch, **dadurch gekennzeichnet, dass** jeder Einspannarm (64, 64B) nach Art eines Hebels um eine Längsachse (B) schwenkbar auf den Träger (56) montiert ist.

6. Vorrichtung (40) nach dem vorhergehenden Anspruch, **dadurch gekennzeichnet, dass** das Betätigungselement von einem Gleitstück (82, 99) geformt wird, das senkrecht gleitend in der Nähe der Drehachse (A) des Greifers (54) montiert ist, wobei die Steuereinrichtungen Einrichtungen aufweisen, um die senkrechte Gleitbewegung des Gleitstücks (82, 99) in eine Schwenkbewegung jedes Einspannarms (64, 64B) zwischen den zwei offenen und geschlossenen Stellungen des Greifers (54) umzuwandeln.

7. Vorrichtung (40) nach dem vorhergehenden Anspruch, **dadurch gekennzeichnet, dass** das Gleitstück (82) gleitend mit einer Oberseite jedes Betätigungsarms (68) in Kontakt steht, so dass es senkrecht gegen die Seite drückt, um den zugeordneten Einspannarm (64) durch Hebelwirkung in die offene Stellung des Drehgreifers (54) zu schwenken.

8. Vorrichtung (40) nach Anspruch 6, **dadurch gekennzeichnet, dass** das Gleitstück (99) über einen Hebelarm (100) mit dem Einspannarm (64B) verbunden ist, um den Einspannarm (64B) beim Gleiten des Gleitstücks (99) durch Hebelwirkung zu schwenken.

9. Vorrichtung (40) nach Anspruch 4, **dadurch gekennzeichnet, dass** jeder Einspannarm (64) um eine senkrechte Achse (C) schwenkbar montiert ist.

10. Vorrichtung (40) nach dem vorhergehenden Anspruch, **dadurch gekennzeichnet, dass** das Betätigungselement einen Nocken-Exzenter (116) aufweist, der um eine senkrechte Achse (D) in der Nähe der Drehachse (A) des Drehgreifers (54) schwenkbar montiert ist, wobei der Nocken-Exzenter (116) mit einem freien Ende jedes Betätigungsarms (68) in gleitendem Kontakt steht, um jeden Einspannarm (64) beim Schwenken des Nocken-Exzenters (116) durch Hebelwirkung zu schwenken.

11. Vorrichtung (40) nach einem der vorhergehenden Ansprüche, **dadurch gekennzeichnet, dass** der Drehgreifer (54) elastisch in seine geschlossene Stellung zurückgestellt wird.

12. Vorrichtung (40) nach einem der vorhergehenden Ansprüche, **dadurch gekennzeichnet, dass** jede Backe (66, 66A, 66B) eine Kerbe (72) aufweist, die dazu bestimmt ist, einen ringförmigen äußeren Wulst (30) des Halses (26) der Vorform (20) zur senkrechten Blockierung der Vorform (20) aufzunehmen.

13. Vorrichtung (40) nach einem der vorhergehenden Ansprüche, **dadurch gekennzeichnet, dass** jede Backe (66, 66A, 66B) sich über einen Winkelsektor erstreckt, der global kleiner als 90° ist.

## Claims

1. Device (40) for transporting a tubular preform (20) with rotation of the preform (20) about its main vertical axis (A), the device (40) comprising:
- a gripper (54) for gripping the preform (20) externally by its neck (26), the gripper (54) being rotatably mounted about a vertical axis of rotation (A) on a mounting plate (52) so as to rotate the gripped preform (20) about its main axis (A);
- a first jaw (66, 66A) and a second opposite jaw (66, 66B) of the gripper (54), each of which is intended to cooperate with an angular sector of the external face of the neck (26) of the preform (20), at least one of the two jaws (66, 66B) being moveable in a direction globally orthogonal to the axis (A) of rotation of the gripper (54);
- means for controlling the gripper between:
-- an open position in which the jaws (66, 66A, 66B) are moved apart from one another to allow the insertion of the neck (26) of the preform (20) between the jaws (66, 66A, 66B) into a clamping space (70);
-- a closed position in which the jaws (66, 66A, 66B) are moved towards one another to grip, by transverse clamping between the two jaws (66, 66A, 66B), the pre-inserted neck (26) of the preform (20);
**characterized in that**, in the open position of the gripper (54), a passage (71) is reserved for the lateral insertion of the neck (26) of the preform (20) between the jaws (66, 66A, 66B) in a direction orthogonal to the axis (A) of rotation of the gripper (54), and **in that** the device (40) comprises means for angularly indexing the gripper (54) to allow the gripper (54) to be oriented so that the neck (26) of the preform (20) is inserted laterally into the clamping space (70).

2. Device (40) according to the preceding claim, **characterized in that** the rotating gripper (54) comprises an upper support (56) which extends vertically in line with the clamping space (70), and **in that** the means for controlling the rotating gripper (54) are borne by the support (56) so as to be coupled in rotation with the rotating gripper (54).

3. Device (40) according to the preceding claim, **characterized in that** each moveable jaw (66, 66B) is formed by a lower end of a globally vertical clamping arm (64, 64B) mounted moveably on the upper support (56), and **in that** an upper actuating arm (68) extends from the upper end of the lower clamping arm (64, 64B), the actuating arm (68) being arranged inside a volume delimited by a vertical right cylinder, the directrix of the said cylinder being formed by the contour of the clamping space (70).

4. Device (40) according to the preceding claim, **characterized in that** the control means comprise a moveable actuating element (82, 99, 114) which is able to transmit mechanically a force exerted from outside the rotating gripper (54) to each moveable clamping arm (64, 64B) to move apart the jaws (66, 66B) in the open position, the actuating element (82, 99, 114) being arranged vertically in line with the clamping space.

5. Device (40) according to the preceding claim, **characterized in that** each clamping arm (64, 64B) is pivotably mounted in the manner of a lever about a longitudinal axis (B) on the support (56).

6. Device (40) according to the preceding claim, **characterized in that** the actuating element is formed by a slide (82, 99) which is slideably mounted vertically in the vicinity of the axis (A) of rotation of the gripper (54), the control means comprising means for converting the vertical sliding movement of the slide (82, 99) into a pivoting movement of each clamping arm (64, 64B) between the two open and closed positions of the gripper (54).

7. Device (40) according to the preceding claim, **characterized in that** the slide (82) is in sliding contact with an upper face of each actuating arm (68) so as to bear vertically against the said face to pivot the associated clamping arm (64) by a lever effect towards the open position of the rotating gripper (54).

8. Device (40) according to Claim 6, **characterized in that** the slide (99) is connected to the clamping arm (64B) via a link rod (100) so as to pivot the clamping arm (64B) by a lever effect during the sliding of the slide (99).

9. Device (40) according to Claim 4, **characterized in that** each clamping arm (64) is pivotably mounted about a vertical axis (C).

10. Device (40) according to the preceding claim, **characterized in that** the actuating element comprises a cam-type eccentric (116) which is pivotably mounted about a vertical axis (D) in the vicinity of the axis (A) of rotation of the rotating gripper (54), the cam-type eccentric (116) being in sliding contact with a free end of each actuating arm (68) so as to pivot each clamping arm (64) by a lever effect during the pivoting of the cam-type eccentric (116).

11. Device (40) according to any one of the preceding claims, **characterized in that** the rotating gripper (54) is returned elastically towards its closed position.

12. Device (40) according to any one of the preceding claims, **characterized in that** each jaw (66, 66A, 66B) comprises a notch (72) which is intended to receive an outer annular bead (30) of the neck (26) of the preform (20) for vertically blocking the preform (20).

13. Device (40) according to any one of the preceding claims, **characterized in that** each jaw (66, 66A, 66B) extends over an angular sector which is globally less than 90°.
